Europäisches Patentamt

European Patent Office

Office européen des brevets

(11) Publication number: **0 400 894 B1**

# EUROPEAN PATENT SPECIFICATION

(45) Date of publication of patent specification: **20.07.94** (51) Int. Cl.⁵: **C09K 5/04**

(21) Application number: **90305648.9**

(22) Date of filing: **24.05.90**

(54) **Refrigeration compositions and process for using.**

(30) Priority: **02.06.89 US 360983**

(43) Date of publication of application:
**05.12.90 Bulletin 90/49**

(45) Publication of the grant of the patent:
**20.07.94 Bulletin 94/29**

(84) Designated Contracting States:
**AT BE CH DE DK ES FR GB GR IT LI LU NL SE**

(56) References cited:
**US-A- 4 755 316**

**PATENT ABSTRACTS OF JAPAN, FILE SUP-
PLIER JAPS, Tokyo, JP; & JP-A-11 159 999**

**PATENT ABSTRACTS OF JAPAN, FILE SUP-
PLIER JAPS, Tokyo, JP; & JP-A-12 56 594**

**PATENT ABSTRACTS OF JAPAN, FILE SUP-
PLIER JAPS, Tokyo, JP; & JP-A-59 179 699**

(73) Proprietor: **UNION CARBIDE CHEMICALS AND
PLASTICS COMPANY, INC.
39 Old Ridgebury Road
Danbury Connecticut 06817-0001(US)**

(72) Inventor: **Gorski, Robert Alexander
735 Harvard Lane
Newark, Delaware 19711(US)**
Inventor: **Brown, William Lovell
288 Bear Ridge Road
Pleasantville, New York 10570(US)**

(74) Representative: **Woodcraft, David Charles et
al
BROOKES & MARTIN
High Holborn House
52/54 High Holborn
London, WC1V 6SE (GB)**

**Description**

Field of the Invention

This invention relates to lubricants used with refrigerants in compression refrigeration. More particularly, it relates to lubricants for use with tetrafluoroethanes, e.g. 1,1,1,2 - Tetrafluoroethane (HFC-134a), 1,1,2,2 - Tetrafluoroethane (HFC-134), etc., and of lesser importance, pentafluoroethanes (HFC-125). These refrigerants are being considered as replacements for dichlorodifluoromethane (CFC-12), particularly in automotive air conditioning systems.

Background of the Invention

Refrigeration systems that use CFC-12 as the refrigerant generally use mineral oils to lubricate the compressor. (See for example the discussion in Chapter 32 of the 1980 ASHRAE Systems Handbook.) CFC-12 is completely miscible with such oils throughout the entire range of refrigeration system temperatures, i.e. -45°C to 65°C. In automotive air-conditioning, paraffinic and naphthenic oils of about 500 SUS viscosity at 100°F are used with CFC-12. These oils have "pour points" below -20°C and are completely miscible with the CFC-12 refrigerant over the range of temperatures from -10°C to 100°C. Consequently, oil which dissolves in the refrigerant travels throughout the refrigeration loop in the air conditioning system and returns with the refrigerant to the compressor. It does not separate during condensation, although it may accumulate because of the low temperature when the refrigerant is evaporated. At the same time, this oil which lubricates the compressor will contain some refrigerant which, in turn, may affect its lubricating properties.

When substituting HFC-134a or HFC-134 for CFC-12 in these refrigeration systems, it would be desirable to be able to use the same mineral oils as used with CFC-12. It would not require any substantial change in equipment nor any significant changes in conditions used for the system. If lubricant separates from refrigerant during operation of the system, serious problems may result, i.e. the compressor could be inadequately lubricated. This would be most serious in automotive air-conditioning systems because the compressors are not separately lubricated and a mixture of refrigerant and lubricant circulate throughout the entire system. Unfortunately, however, the mineral oils are not adequately miscible with the tetrafluoroethanes.

Two recent publications of ASHRAE discuss the problems associated with separation of lubricants and refrigerants. These are "Fundamentals of Lubrication in Refrigerating Systems and Heat Pumps" Kruse and Schroeder ASHRAE Transactions Vol. 90 Part 2B, pps. 763-782, 1984 and "Evaluation of Lubricants for Refrigeration and Air-Conditioning Compressors" Spauschus ibid pps. 784-798.

In summary, refrigerants which are not completely miscible with an oil in the full range of mixture compositions and operating temperatures may become miscible or immiscible as the temperature is raised or lowered from room temperature. The areas of immiscibility may assume a variety of shapes, i.e. parabolic or non-parabolic. As a parabola, the curve of miscibility temperature vs. percent oil in the mixture, may have its open or concave portion facing the low or high temperatures. The closed or convex portion of the parabolic curve identifies, respectively, the maximum or minimum temperature above or below which the refrigerant and the lubricating oil are completely miscibile. These temperatures are referred to as the maximum or minimum "consolute temperatures." Beside parabolas, these curves can assume skewed parabolic shapes or curves of varying slope wherein immiscibility occurs above or below the curve.

One of the objects of this invention is to provide a combination of lubricating oil and tetrafluoroethane, e.g. HFC-134a, where the area of miscibility encompasses the full ranges of temperature and composition encountered in compression refrigeration, i.e., complete miscibility occurs for all compositions in the range of -45°C to at least 20°C. Another object is to provide a process for using such compositions in compression refrigeration.

Prior Art

U.S. Patent No. 4,248,726, issued February 5, 1981, and U.S. Patent No. 4,267,064, issued May 12, 1981, both to Nippon Oil Co. et al, relate to the use of a polyglycol oil such as polyoxypropylene glycol (or an alkyl ether thereof) having a viscosity index of at least 150 and a glycidyl ether type epoxy compound as a high viscosity refrigeration oil composition for halogen-containing refrigerants. These polyglycol/glycidyl ether compositions are disclosed for use with Freon®11, 12, 13, 22, 113, 114, 500 and 502; and as being "particularly effective" with Freon®12 or 22.

Research Disclosure 17486 entitled "Refrigeration Oil" by E. I. du Pont de Nemours & Co. discloses polyalkylene glycols such as "Ucon" LB-165 and "Ucon" LB-525 sold by Union Carbide Corporation, for use with HFC-134a. These glycols are polyoxypropylene glycols that are mono-functional and are prepared from propylene oxide initiated with n-butanol. The publication states that these combinations of oil and refrigerant are miscible in all proportions at temperatures at least as low as -50°C and are thermally stable in the presence of steel, copper and aluminum at 175°C for about six days.

U.S. Patent No. 4,755,316, issued July 5, 1988, to Allied-Signal Inc. also relates to the use of polyalkylene glycols. However, these glycols are at least difunctional with respect to hydroxyl groups and contain at least 80% propylene units relative to the total, the remaining 20% may derive from ethylene or butylene oxide or esters, olefins and the like which are polymerizable with propylene oxide. It should be noted that only 100% oxypropylene units in the difunctional PAG's are exemplified in this patent.

## Summary of the Invention

The present invention is based on the discovery that the use of a sufficient amount to lubricate, usually 10-20% by volume, for automotive use, but in some situations as high as 50% by volume of at least one di-functional, preferably a random, polyalkylene glycol (PAG), also is referred to as polyoxyalkylene glyclol, based on a significant amount of ethylene oxide with propylene oxide, preferably from 25%-75% ethylene oxide and, correspondingly, 75%-25% propylene oxide, will be completely miscible with tetrafluoroethane and pentafluoroethanes, usually 80-90% by volume of the tetrafluoroethanes, HFC-134 and HFC-134a, and the pentafluoroethane, HFC-125, or blends thereof with each other and with other refrigerants in the range of temperatures from -40°C to at least 20°C. The more preferred weight per cents of oxypropylene units and oxyethylene units in the PAG are from 40-60% to 60-40%, respectively; and the most preferred ratio is about 50:50. The weight ratio of refrigerant to the PAG lubricant in the mixtures used for refrigeration may be anywhere from 99/1 to 1/99, preferably 99/1 to 70/30. The viscosities of these compositions may be anywhere from 100 to 1200 SUS but for most commercial uses, from 400 to 1000 SUS.

The process of manufacturing the di-functional random PAG's may involve initiation with a glycol having anywhere from two to six carbon atoms between -OH groups. Diethylene glycol is the preferred initiator; and the process of manufacture is described in the Encyclopedia of Polymer Science and Engineering, Volume 6; "Ethylene Oxide Polymers and Copolymers" by Clinton and Matlock, 2nd edition, 1986, John Wiley & Sons.

It has been found that the use of 0.1-1.3% of an "extreme pressure additive" improves the lubricity and load-bearing characteristics of the butanol-initiated monofunctional random polyalkylene glycol having 50% oxyethylene units as set forth in the U.S. Application Serial No. (CH-1651); and it is expected that the EP additives will also improve the quality of the refrigerant-lubricant compositions of this invention. EP additives for use in the invention are included among those disclosed in Table D of U.S. Patent 4,755,316. The preferred ones are the organic phosphates and include Lubrizol®1097, a zinc (dialkyl dithio) phosphate manufactured by the Lubrizol Corporation; and SYN-O-AD® 8478, a 70%/30% blend of tri (2, 4, 6-tri-t-butyl phenyl) phosphate/triphenyl phosphate manufactured by the Stauffer Chemical Company.

EP additives may also be used in conjunction with some of the oxidation and thermal stability improvers and/or corrosion inhibitors disclosed in Table D of U.S. Patent 4,755,316. Such a preferred blend of additives is MLX-788, a proprietary mixture of Union Carbide Corporation containing a phosphate and two amine-containing compounds.

## Description of Preferred Embodiments

As stated previously, the tetrafluoroethanes, e.g. HFC-134a, HFC-134 and pentafluoroethane, HFC-125, particularly HFC134a, have physical characteristics which allow substitution for CFC-12 with only a minimum of equipment changes in compression refrigeration. They could be blended with each other, as well as with other refrigerants including CFC-12($CCl_2F_2$), HCFC-22($CHClF_2$), HFC-152A($CH_3CHF_2$), HCFC-124 ($CHClFCF_3$), HCFC-124a ($CHF_2CClF_2$), HCFC-142b($CH_3CClF_2$), HFC-32 ($CH_2F_2$), HFC-143a($CH_3CF_3$), HFC-143 ($CHF_2CH_2F$), HFC-125($CF_3CHF_2$) and FC-218 ($CF_3CF_2CF_3$); and for purposes of the present invention such blends are not excluded. However, only those blends of tetrafluoroethane or pentafluoroethane with other refrigerants which are miscible with the lubricants of this invention in the range of -40°C to at least +20°C are included.

HFC-134a, the preferred tetrafluoroethane refrigerant, may be prepared by any of the methods disclosed in the prior art; e.g., U.S. 2,745,886; 2,887,427; 4,129,603; 4,158,675; 4,311,863; 4,792,643 and British 1,578,933 and 2,030,981, which are incorporated herein by reference.

The most preferred di-hydroxyl polyalkylene glycol for use in this invention is based on the random polymerization of a 50/50 weight percent mixture of ethylene oxide and propylene oxide initiated with diethylene glycol. Although the amount of ethylene oxide can range from 25 to 75 weight % of the ethylene oxide/propylene oxide composition and the viscosity can range from 100 to 1200 SUS viscosity at 38°C (100°F), preferably 400 to 1200 SUS, the most preferred PAG is the "50H400" (400 representing the SUS viscosity at 38°C (100°F); "H" representing "hydrophyllic" and "50" indicating the presence of 50% ethylene oxide units) that is manufactured by the Union Carbide Corporation. The process for its manufacture is described in the 1986 edition of the Encyclopedia of Polymer Science and Engineering.

The preferred 50H400 oil has a pour point below -40°C, is completely miscible with HFC-134a from -50°C to condenser temperatures above 45°C, and should meet all the other requirements for automotive air conditioning, i.e. viscosity index, stability, lubricity, and miscibility with HFC-134a down to below -10°C. Furthermore, the use of an extreme pressure additive such as those mentioned previously should improve the load-carrying capability significantly.

Specifically, the lubricants used in the compositions of this invention, and in the invented method for providing lubrication in compression refrigeration equipment have the following characteristics:

Viscosity at 38°C (100°F)

100 to 1200 SUS, preferably 400 to 1200 SUS, most preferably 500 SUS for automotive air-conditioning;

Viscosity index

>90, preferably 150 to 250 or higher;

Pour point

<-20°C, preferably -20°C to -50°C and -35°C for the 100 SUS and 1200 SUS oils, respectively;

Solubility or miscibility range

100% from at least 20°C to less than -10°C for 1-99 weight percent of HFC-134a in mixture with the lubricant.

1. Solubility of Refrigerant in Lubricants

Six ml. blends of refrigerant and lubricant were used for the solubility studies. Generally, the mixtures contained 30, 60 and 90 wt. % refrigerant. In some instances, more compositions were made to better define the miscible/immiscible region. These air-free mixtures were contained in sealed Pyrex® tubes (7/16'' I.D. x 5.5'', ca. 12.5 cc capacity). The refrigerant/lubricant solubilities were determined by completely immersing the tube in a bath at each test temperature for a minimum of 15 minutes and providing agitation to facilitate mixing and equilibration. The accuracy of determining the temperatures where the refrigerant/lubricant blend became either miscible or immiscible was about ± 2°C. The refrigerant/lubricant blends were called immiscible when the blend acquired and retained "schlieren" lines, became hazy or cloudy, formed floc, or formed two liquid layers.

2. Viscosity and Viscosity Index

a. Viscosity is a property that defines a fluid's resistance to shearing force. It is expressed in terms of absolute viscosity, kinematic viscosity or Saybolt Seconds Universal viscosity (SSU), depending on the method by which it is determined. Conversion from SSU to $mm^2/s$ (centistokes) can be readily made from tables contained in ASTM D-455, but it is necessary to know the density to convert kinematic viscosity to absolute viscosity. Refrigeration oils are sold in viscosity grades, and ASTM has proposed a system of standardized viscosity grades for industry-wide usage (D-2422).

b. Viscosity Index is a measure of the amount of change experienced by an oil with temperature. Viscosity decreases as the temperature increases and increases as the temperature decreases. The relationship between temperature and kinematic viscosity is represented by:

4

$$\log \log (v + 0.7) = A + B \log T$$

where

$v =$ kinematic viscosity, $mm^2/s$ (CST)

$T =$ thermodynamic temperature (kelvin)

$A, B =$ constants for each oil

This relationship is the basis for the viscosity temperature charts published by ASTM and permits a straight line plot of viscosity over a wide temperature range. This plot is applicable over the temperature range in which the oils are homogenous liquids.

The slope of the viscosity-temperature lines is different for different oils. The viscosity-temperature relationship of an oil is described by an empirical number called the Viscosity Index (VI) (ASTM D-2270). An oil with a high viscosity index (HVI) shows less change in viscosity over a given temperature range than an oil with a low viscosity index (LVI).

3. <u>Pour Point</u>

Any oil intended for low temperature service should be able to flow at the lowest temperature likely to be encountered. This requirement is usually met by specifying a suitable low pour point. The pour point of an oil is defined as the lowest temperature at which it will pour or flow, when tested according to the standard method prescribed in ASTM D-97.

The invention will be more clearly understood by referring to the following experiments which are presented in Tables I-VI.

1. <u>Solubility Data</u>

Table I summarizes the solubility data for the di-functional random alkylene glycol polymers/tetrafluoroethane refrigerant compositions of this invention. The PAG's contained 25-75% ethylene oxide units and, correspondingly, 75-25% propylene oxide units. The preparation of the most preferred composition in Experiment 1 involved diethylene glycol as initiator.

It should be understood that Experiment 1 was an actual test run whereas Experiments 2-7 represent estimations based on the actual runs shown in Table IB and the minimum consolute temperatures shown in Table IA. Table IA illustrates that the minimum consolute temperature for the lubricant used in Experiment 1, 50H400, in combination with the refrigerant, HFC-134a, corresponds substantially to the minimum consolute temperature for the mixtures of HFC-134a with the lubricant, 50 HB400*, as determined from Figure I, a plot of minimum consolute temperatures vs. SUS viscosity at 38°C (100°F) for the 50 HB series. That is, the minimum consolute temperature for the mixture of HFC-134a and 50HB400 is 47°C; and the minimum consolute temperature for the mixture of HFC-134a and 50H400 is 45°C. The minimum consolute temperatures of 45°C and 47°C are within experimental error. Thus, it is expected that the estimated miscible ranges for Experiments 2-7 are substantially as shown in Table I.

The solubility data shown in Table I indicate that PAG's used in the invention provided superior results when compared at equivalent viscosities, to:

(1) mono-functional PAG's containing 100% propylene oxide units as shown in Table II.

(2) PAG's with less than one -OH group as shown in Table III.

(3) PAG's containing 100% propylene oxide units with two -OH groups as shown in Table IV**.

(4) PAG's with three -OH groups, three of which were initiated with glycerine as shown in Table V.

In Table VI, data are presented showing the immiscibility of HFC-134a with miscellaneous refrigerant oils which may be used with CFC-12, including those oils typically used with CFC-12 for automotive air conditioning e.g. paraffinic (BVM-100N) and naphthenic (Suniso 5GS).

* Manufactured by Union Carbide Corporation where H = hydrophillic; B = butanol initiated; 50 = 50% ethylene oxide units (and 50% propylene oxide units).

** Minimum consolute temperature of 36°C compared to 45°C for the mixture of the invention as shown in Table IA.

## Table I
### Solubility of Refrigerant (HFC-134a) with Lubricant
(PAG containing two functional -OH groups)
(Test Range: 93 to -50°C)

| Expt. No. | Lubricant | Viscosity at 100°F (SUS) | Weight % HFC-134A in Lubricant | Miscible Range (°C) |
|---|---|---|---|---|
| 1 | 50H400** | 400 | 30 | 93 to -50 |
|   |   |   | 60 | 69 to -50 |
|   |   |   | 90 | 46 to -50 |
| 2* | 50H260 | 260 | 30 | 93 to -50* |
|   |   |   | 60 | 93 to -50* |
|   |   |   | 90 | 56 to -50* |
| 3* | 50H350 | 350 | 30 | 93 to -50* |
|   |   |   | 60 | 60 to -50* |
|   |   |   | 90 | 51 to -50* |
| 4* | 75H350 | 350 | 30 | 93 to -10* |
|   |   |   | 60 | 69 to -50* |
|   |   |   | 90 | 44 to -50* |
| 5* | 50H500 | 500 | 30 | 93 to -50* |
|   |   |   | 60 | 55 to -50* |
|   |   |   | 90 | 42 to -50* |
| 6* | 25H530 | 530 | 30 | 93 to -50* |
|   |   |   | 60 | 58 to -50* |
|   |   |   | 90 | 37 to -50* |
| 7* | 50H660 | 660 | 30 | 50 to -50* |
|   |   |   | 60 | 40 to -50* |
|   |   |   | 90 | 30 to -50* |

*    Estimated from comparison to monofunctional series
     of random polyoxyalkylene glycols

**   Manufactured by Union Carbide Corporation
     where:  H   = hydrophyllic
       50 = 50/50 wt. % polyoxyethylene/polyoxypropylene
       400 = 400 SUS viscosity at 38°C (100°F).

EP 0 400 894 B1

Table IA

| Minimum Consolute Temperatures of Random PAG's containing 50% oxyethylene units | |
|---|---|
| Lubricant | Minimum Consolute Temperature (°C) |
| 50HB260 | 56 |
| 50HB400 | 47 |
| 50H400 | 45 |
| 50HB500 | 42 |
| 50HB660 | 30 |

## Table IB

### Solubility of Refrigerant (HFC-134a)
### with Lubricant (Random PAG's
### containing one functional -OH group)
### (Test Range: 93 to -50°C)

|  | Miscible Range for Indicated Concentration of HFC-134a in Lubricant | | |
|---|---|---|---|
| Lubricant | 30% | 60% | 90% |
| 50HB260 | 93 to -50 | 93 to -50 | 56 to -50 |
| 50HB400 | 93 to -49 | 69 to -50 | 43 to -50 |
| 50HB500 | 93 to -50 | 55 to -50 | 42 to -50 |
| 50HB660 | 50 to -50 | 40 to -50 | 30 to -50 |

* Manufactured by Union Carbide Corporation where

  50 = wt. % ethylene oxide units (remainder propylene oxide units);

  H = hydrophillic;

  B = butanol-initiated polymer

  260, 350, 400, etc. = SUS viscosity at 38°C (100°F).

7

## Table II

### Solubility of HFC-134a with Mono-functional PAG's Containing No Ethylene Oxide Units
#### (Test range 93 to -50°C)

| Expt. No. | Lubricant* | Wt. % HFC in HFC/Oil Mix | Miscible Range (°C) |
|---|---|---|---|
| Control A | LB-165** | 30,60 | 93 to -50 |
| | | 70 | 80 to -50 |
| | | 73,90 | 73 to -50 |
| | | 94 | 68 to -50 |
| Control B | LB-285** | 60 | 78 to -50 |
| | | 80 | 40 to -50 |
| | | 94 | 53 to -50 |
| | | 97 | 58 to -50 |
| | | 99 | 58 to -50 |
| Control C | LB-525** | 30 | 40 to -50 |
| | | 60 | 36 to -40 |
| | | 90 | -7 to -23 |

\* Key for determining lubricant

    L = lipophyllic

    B = butanol-initiated polymer

    no first number = 0% ethylene oxide units or 100% propylene oxide units

    165,285 and 525 = SUS viscosity at 38°C (100°F)

\*\* Manufactured by Union Carbide Corporation

<u>Table III</u>

Solubility of HFC-134a with PAG's Containing
Less Than One Functional OH Group
(Test Range: 93 to -50°C)

| Expt.No. | Oil | Miscible Range (°C) for Shown Concs. of HFC in Oil (Wt.%) | | |
|---|---|---|---|---|
| | | 30% | 60% | 90% |
| Control D | 50HG300(+3 acetoxy caps)* | 93 to -10 | 93 to -10 | 67 to -50 |
| Control E | 50H400(+2 acetoxy caps)** | 93 to -10 | 93 to -10 | 53 to-50 |
| Control F | 50HB400(+1 acetoxy cap)*** | 93 to -10 | 25 to -50 | 25 to -50 |
| Control G | 50HB500(+0.5 butyl cap)*** | Insoluble | Insoluble | Insoluble |
| Control H | 50HB500(+0.91 methyl cap)*** | 93 to 45 | 93 to 45 | Insoluble |
| Control I | 50HB500(+0.95 methyl cap)*** | 93 to 50 | 93 to 75 | Insoluble |

\*   50HG300(+3 acetoxy caps)
     key: 50 = 50/50 wt.% polyoxyethylene/polypropylene
     H = hydrophyllic
     G = PAG initiated with glycerol
     300 = 300SUS viscosity at 38°C (100°F)
     3 acetoxy caps = the 3 OH groups were capped with
                      the acetoxy group from acetic
                      anhydride

\*\*  Polymer initiated with diethylene glycol
\*\*\* Polymer initiated with butanol

Table IV

| Minimum Consolute Temperature of Mixtures of HFC-134a with PAG's Containing Two Functional OH Groups | | | |
|---|---|---|---|
| Expt.No. | Oil | Viscosity at 38°C (100°F) SUS | Minimum Consolute Temperature(°C) |
| Control J | Polyoxypropylene diol * | 554 | 31 |
| Control K | Polyoxypropylene diol ** | 154 | 45 |
| Control L | Polyoxypropylene diol | 400 | 36 *** |

\* Manufactured by CPI Engineering Co.
\*\* "Niax PPG425" manufactured by Union Carbide Corp.
\*\*\* Linear interpolation from Controls J and K

Table V

| Solubility of HFC-134a with PAG's Containing Three Functional OH Groups (Test Range: 93 to -50°C) | | | | |
|---|---|---|---|---|
| Expt.No. | Oil | Viscosity at 38°C (100°F) SUS | Wt. % HFC-134a in Oil | Miscible Range (°C) |
| Control M | 50HG400* | 400 | 30<br>60<br>90 | 93 to 25<br>25 to 5<br>25 to -50 |
| Control N | 50HG450* | 450 | 30<br>60<br>90 | 25 to -50<br>25 to -50<br>20 to -50 |
| Control O | 100HG550* | 550 | 30<br>60<br>90 | 24 to -40<br>Insoluble<br>Insoluble |
| Control P | $CH_3C(CH_2OCH_2-CH_2OCH_2CH_2OH)_3$ | 562 | 30<br>60<br>90 | Insoluble<br>Insoluble<br>Insoluble |

\* G = Glycerol-initiated polymer

## Table VI
## Solubility of HFC 134a with Available Miscellaneous Refrigrant Oils
### (Test Range: 93 to -50°C unless indicated otherwise)

| Expt. No. | Oil | Miscible Range (°C) for Indicated Concentration (Wt %) of HFC-134a In Lubricant | | |
|---|---|---|---|---|
| | Dipentaerythritol Esters of Fatty Acids (c) | 30% | 60% | 90% |
| Control Q | 240 SUS | -50+ | - 4+ | 40+ |
| Control R | 290 SUS | -44+ | -17+ | 70+ |
| | PEG Esters of Fatty Acids (d) | | | |
| Control S | 144 SUS | -21+ | 54(a) | 54(a) |
| Control T | 620 SUS | - 4+ | 4+ | 70+ |
| Control U | 830 SUS | - 6+ | 70+ | 70+ |
| | Napthenic Oils (e) | | | |
| Control V | Suniso® 5GS (500 SUS, 38% aromatic) | 54(a) | 54(a) | 54(a) |
| Control W | Witco 500 (500 SUS) | 54(a) | 54(a) | 54(a) |
| Control X | Expt. Oil (520 SUS, 47% aromatic) | 54(a) | 54(a) | 54(a) |
| Control Y | Expt. Oil (529 SUS, 75% aromatic) | 54(a) | 54(a) | 54(a) |
| | Paraffin Oil (b) | | | |
| Control Z | BVM-100N (500 SUS) | 54(a) | 54(a) | 54(a) |
| | Alkyl Benzene | | | |
| Control A' | Zerol 300 (300 SUS) (g) | 54(a) | 54(a) | 54(a) |
| Control B' | DN600 (125 SUS) (b) | 54(a) | 54(a) | 54(a) |
| Control C' | Atmos HAB15F (78 SUS) (i) | 55+ | Ins(b) | Ins(b) |
| | Silicone Oils | | | |
| Controls D',E',F' | L-45 Oils (163, 231, & 462 SUS)(j) | Ins(b) | Ins(b) | Ins(b) |

```
+ - Soluble at and above shown temperature.
a - May be soluble above shown temperature.
b - Completely insoluble from 93 to -50°C.
c - Hercules              g - Shrieve Chemical Co.
d - CPI Engineering       h - Conoco
e - Witco Chemical Co.    i - Nippon Oil KK
f - BVM Associates        j - Union Carbide
```

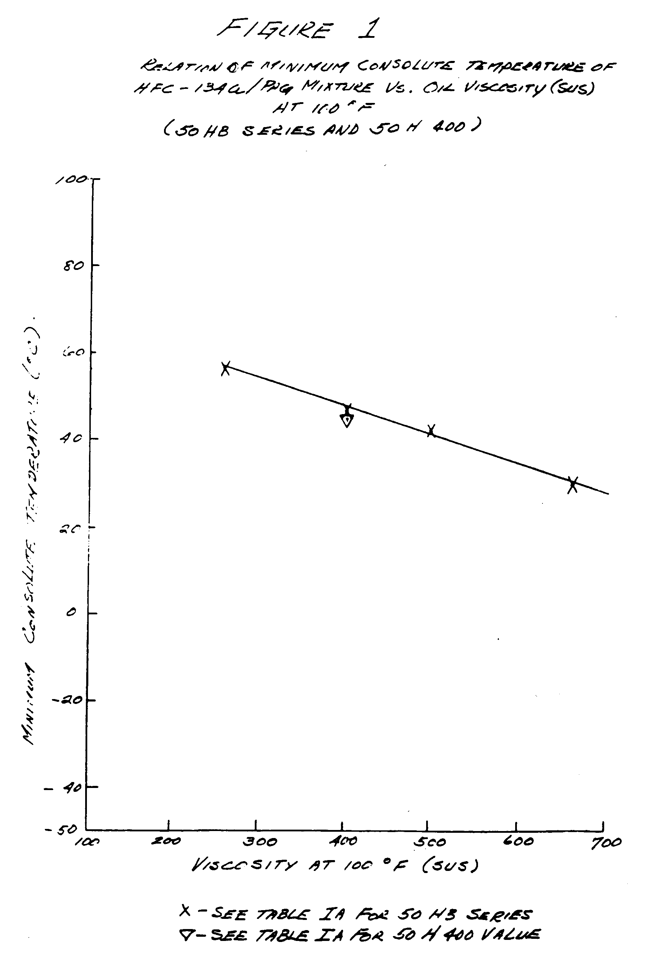

## Claims

1. A composition for use in compression refrigeration comprising:

(a) at least one refrigerant selected from the group consisting of tetrafluoroethane and pentafluoroethane; and

(b) a sufficient amount to provide lubrication of at least one random polyalkylene glycol which is difunctional with respect to hydroxyl groups and based on 25% to 75% ethylene oxide and, correspondingly, 75% to 25% propylene oxide, having an SUS viscosity at 38°C (100°C) of 100 to 1200 and being miscible in combination with component (a) in the range of temperatures from -40°C to at least +20°C.

2. The composition of claim 1 wherein said tetrafluoroethane comprises, 1,1,2,2-tetrafluoroethane.

3. The composition of claim 1 wherein said tetrafluoroethane comprises 1,1,1,2-tetrafluoroethane.

4. The composition of claim 1 wherein the refrigerant comprises pentafluoroethane.

5. The composition of any one of the preceding claims wherein said di-functional polyalkylene glycol has been prepared using diethylene glycol as an initiator.

6. The composition of any one of the preceding claims wherein the SUS viscosity at 38°C (100°F) of said di-functional polyalkylene glycol is from 400 to 1000.

7. The composition of any one of the preceding claims wherein said polyalkylene glycol comprises 1-99% by weight of said composition.

8. The composition of any one of the preceding claims further comprising (1) an extreme pressure additive, (2) an oxidation and thermal stability improver or (3) a corrosion inhibitor.

9. The composition of claim 8 further comprising 0.1-1.3% by weight of an extreme pressure additive.

10. The composition of claim 1 wherein said tetrafluoroethane is 1,1,1,2-tetrafluoroethane and said di-functional random polyalkylene glycol is prepared using a diethylene glycol initiator, is based on 40-60% ethylene oxide and, correspondingly, 60-40% propylene oxide, has an SUS viscosity at 38°C (100°F) of from 400 to 1000 and is completely miscible in combination with said tetrafluoroethane in the temperature range from -50°C to at least +40°C.

11. Use as a lubricant in a tetrafluoroethane refrigerant in compression refrigeration of at least one random di-functional polyalkylene glycol based on 25% to 75% ethylene oxide and, correspondingly, 75% to 25% propylene oxide and having an SUS viscosity at 38°C (100°F) of 100 to 1200.

12. Use as claimed in claim 11 wherein said polyalkylene glycol is based on 40 to 60% ethylene oxide units and has an SUS viscosity of 400 to 1000 at 38°C (100°F).

13. A method for improving lubrication in compression refrigeration equipment using tetrafluoroethane as the refrigerant which comprises using 1-99% by weight of the combination of said tetrafluoroethane of at least one random di-functional polyalkylene glycol based on 25%-75% ethylene oxide and 75%-25% propylene oxide and having an SUS viscosity of 100-1200 at 38°C (100°F).

14. The method of claim 13 wherein said polyalkylene glycol is based on about 50% ethylene oxide units and has an SUS viscosity of about 400 at 38°C (100°F).

15. A method for improving lubrication in compression refrigeration equipment using tetrafluoroethane as the refrigerant which comprises using 10-50% by volume of the combination with said tetrafluoroethane of at least one random di-functional polyalkylene glycol based on 25%-75% ethylene oxide and 75%-25% propylene oxide and having an SUS viscosity of 400-1000 at 38°C (100°F).

**Patentansprüche**

1. Zusammensetzung zur Verwendung bei der Kompressions-Kälteerzeugung, umfassend:

(a) mindestens ein Kühlmittel, ausgewählt aus der Gruppe bestehend aus Tetrafluorethan und Pentafluorethan; und

(b) eine zur Schmierung ausreichende Menge mindestens eines statistischen Polyalkylenglykols, das in Bezug auf Hydroxylgruppen bifunktionell ist und auf 25% bis 75% Ethylenoxid und entsprechend 75% bis 25% Propylenoxid basiert, eine SUS-Viskosität bei 38°C (100°F) von 100 bis 1200 aufweist und zusammen mit der Komponente (a) im Temperaturbereich von -40°C bis mindestens +20°C mischbar ist.

2. Zusammensetzung nach Anspruch 1, worin das Tetrafluorethan 1,1,2,2-Tetrafluorethan umfaßt.

3. Zusammensetzung nach Anspruch 1, worin das Tetrafluorethan 1,1,1,2-Tetrafluorethan umfaßt.

4. Zusammensetzung nach Anspruch 1, worin das Kühlmittel Pentafluorethan umfaßt.

5. Zusammensetzung nach irgendeinem der vorangehenden Ansprüche, worin das bifunktionelle Polyalkylenglykol unter Verwendung von Diethylenglykol als Starter hergestellt wurde.

6. Zusammensetzung nach irgendeinem der vorangehenden Ansprüche, worin die SUS-Viskosität des bifunktionellen Polyalkylenglykols bei 38°C (100°F) 400 bis 1000 beträgt.

7. Zusammensetzung nach irgendeinem der vorangehenden Ansprüche, worin das Polyalkylenglykol 1-99 Gewichtsprozent der Zusammensetzung umfaßt.

8. Zusammensetzung nach irgendeinem der vorangehenden Ansprüche, die weiter umfaßt (1) ein Höchstdruck-Additiv, (2) einen Oxidations- und thermischen Stabilitäts-verbesserer oder (3) einen Korrosionsinhibitor.

9. Zusammensetzung nach Anspruch 8, die weiter 0,1-1,3 Gewichtsprozent eines Höchstdruck-Additivs umfaßt.

10. Zusammensetzung nach Anspruch 1, worin das Tetrafluorethan 1,1,1,2-Tetrafluorethan ist und das bifunktionelle statistische Polyalkylenglykol unter Verwendung eines Diethylenglykol-Starters hergestellt wird, auf 40-60% Ethylenoxid und entsprechend 60-40% Propylenoxid basiert, eine SUS-Viskosität bei 38°C (100°F) von 400 bis 1000 hat und zusammen mit dem Tetrafluorethan im Temperaturbereich von -50°C bis mindestens +40°C vollständig mischbar ist.

11. Verwendung mindestens eines statistischen bifunktionellen Polyalkylenglykols, das auf 25% bis 75% Ethylenoxid und entsprechend 75% bis 25% Propylenoxid basiert und eine SUS-Viskosität bei 38°C (100°F) von 100 bis 1200 hat, als Schmiermittel in einem Tetrafluorethan-Kühlmittel bei der Kompressions-Kälteerzeugung.

12. Verwendung nach Anspruch 11, worin das Polyalkylenglykol auf 40-60% Ethylenoxid-Einheiten basiert und eine SUS-Viskosität bei 38°C (100°F) von 400 bis 1000 aufweist.

13. Verfahren zur Verbesserung der Schmierung in einer Kompressions-Kälteerzeugungseinrichtung unter Verwendung von Tetrafluorethan als Kühlmittel, welches umfaßt die Verwendung von 1-99 Gewichtsprozent der Kombination des Tetrafluorethans mit mindestens einem statistischen bifunktionellen Polyalkylenglykol, das auf 25%-75% Ethylenoxid und 75%-25% Propylenoxid basiert und eine SUS-Viskosität bei 38°C (100°F) von 100-1200 aufweist.

14. Verfahren nach Anspruch 13, worin das Polyalkylenglykol auf etwa 50% Ethylenoxid-Einheiten basiert und eine SUS-Viskosität bei 38°C (100°F) von etwa 400 aufweist.

15. Verfahren zur Verbesserung der Schmierung in einer Kompressions-Kälteerzeugungseinrichtung unter Verwendung von Tetrafluorethan als Kühlmittel, welches umfaßt die Verwendung von 10-50 Volumenprozent der Kombination des Tetrafluorethans mit mindestens einem statistischen bifunktionellen Polyalkylenglykol, das auf 25%-75% Ethylenoxid und 75%-25% Propylenoxid basiert und eine SUS-Viskosität bei 38°C (100°F) von 400-1000 aufweist.

**Revendications**

1. Composition destinée à être utilisée en réfrigération par compression, comprenant :

   (a) au moins un réfrigérant choisi dans le groupe consistant en tétrafluoréthane et pentafluoréthane ; et

   (b) une quantité, suffisante pour assurer la lubrification, d'au moins un polyalkylèneglycol statistique qui est difonctionnel en ce qui concerne les groupes hydroxyle et qui est à base de 25 % à 75 % d'oxyde d'éthylène et, proportionnellement, 75 % à 25 % d'oxyde de propylène, ayant une viscosité SUS à 38°C (100°F) de 100 à 1200 et étant miscible au constituant (a) dans la plage de températures de -40°C à au moins +20°C.

2. Composition suivant la revendication 1, dans laquelle le tétrafluoréthane consiste en 1,1,2,2-tétrafluoréthane.

3. Composition suivant la revendication 1, dans laquelle le tétrafluoréthane consiste en 1,1,1,2-tétrafluoréthane.

4. Composition suivant la revendication 1, dans laquelle le réfrigérant comprend du pentafluoréthane.

5. Composition suivant l'une quelconque des revendications précédentes, dans laquelle le polyalkylèneglycol difonctionnel a été préparé au moyen de diéthylèneglycol comme initiateur.

6. Composition suivant l'une quelconque des revendications précédentes, dans laquelle la viscosité SUS à 38°C (100°F) du polyalkylèneglycol difonctionnel est comprise dans l'intervalle de 400 à 1000.

7. Composition suivant l'une quelconque des revendications précédentes, dans laquelle le polyalkylèneglycol représente 1 à 99 % en poids de ladite composition.

8. Composition suivant l'une quelconque des revendications précédentes, comprenant en outre (1) un additif extrême-pression, (2) un agent améliorant la résistance à l'oxydation et la stabilité thermique, ou (3) un inhibiteur de corrosion.

9. Composition suivant la revendication 8, comprenant en outre 0,1 à 1,3 % en poids d'un additif extrême-pression.

10. Composition suivant la revendication 1, dans laquelle le tétrafluoréthane est le 1,1,1,2-tétrafluoréthane et le polyalkylèneglycol statistique difonctionnel est préparé au moyen d'un initiateur du type diéthylèneglycol, est à base de 40 à 60 % d'oxyde d'éthylène et, proportionnellement, 60 à 40 % d'oxyde de propylène, possède une viscosité SUS à 38°C (100°F) de 400 à 1000 et est totalement miscible audit tétrafluoréthane dans la plage de températures de -50°C à au moins +40°C.

11. Utilisation comme lubrifiant dans un réfrigérant à base de tétrafluoréthane, en réfrigération par compression, d'au moins un polyalkylèneglycol difonctionnel statistique à base de 25 % à 75 % d'oxyde d'éthylène et, proportionnellement, 75 % à 25 % d'oxyde de propylène et ayant une viscosité SUS à 38°C (100°F) de 100 à 1200.

12. Utilisation suivant la revendication 11, dans laquelle le polyalkylèneglycol est à base de 40 à 60 % de motifs oxyde d'éthylène et possède une viscosité SUS de 400 à 1000 à 38°C (100°F).

13. Procédé pour améliorer la lubrification dans une installation de réfrigération par compression utilisant du tétrafluoréthane comme réfrigérant, qui comprend l'utilisation de 1 à 99% en poids de l'association avec ledit tétrafluoréthane d'au moins un polyalkylèneglycol difonctionnel statistique à base de 25 % à 75 % d'oxyde d'éthylène et de 75 % à 25 % d'oxyde de propylène et ayant une viscosité SUS de 100 à 1200 à 38°C (100°F).

14. Procédé suivant la revendication 13, dans lequel le polyalkylèneglycol est à base d'environ 50 % de motifs oxyde d'éthylène et possède une viscosité SUS d'environ 400 à 38°C (100°F).

**15.** Procédé pour améliorer la lubrification dans une installation de réfrigération par compression utilisant du tétrafluoréthane comme réfrigérant, qui comprend l'utilisation de 10 à 50 % en volume de l'association avec ledit tétrafluoréthane d'au moins un polyalkylèneglycol difonctionnel statistique à base de 25 % à 75 % d'oxyde d'éthylène et de 75 % à 25 % d'oxyde de propylène et ayant une viscosité SUS de 400 à 1000 à 38°C (100°F).

FIGURE 1

RELATION OF MINIMUM CONSOLUTE TEMPERATURE OF
HFC-134a/PAG MIXTURE VS. OIL VISCOSITY (SUS)
AT 100°F
(50 HB SERIES AND 50 H 400)

X - SEE TABLE IA FOR 50 HB SERIES
▽ - SEE TABLE IA FOR 50 H 400 VALUE